(19) Europäisches Patentamt
European Patent Office
Office européen des brevets

(11) EP 0 791 559 B1

(12) EUROPÄISCHE PATENTSCHRIFT

(45) Veröffentlichungstag und Bekanntmachung des Hinweises auf die Patenterteilung:
**13.09.2000 Patentblatt 2000/37**

(51) Int Cl.[7]: **C01F 5/16**

(21) Anmeldenummer: **96102506.1**

(22) Anmeldetag: **20.02.1996**

# (54) Verfahren zur Herstellung eines kristallinen Magnesiumhydroxids

Process for the preparation of crystalline magnesium hydroxide

Procédé de préparation d'hydroxide de magnésium

(84) Benannte Vertragsstaaten:
**DE FR GB**

(43) Veröffentlichungstag der Anmeldung:
**27.08.1997 Patentblatt 1997/35**

(73) Patentinhaber: **MAGNIFIN,**
**Magnesiaprodukte Gesellschaft mbH**
**8614 Breitenau am Hochlantsch (AT)**

(72) Erfinder:
- **Ballhorn, Reinhard, Dr.**
  **64297 Darmstadt-Eberstadt (DE)**
- **Franke, Walter, Prof. Dr.,**
  **12205 Berlin (DE)**

(74) Vertreter: **Schubert, Siegmar, Dipl.-Ing. et al**
**Patentanwälte**
**Dannenberg Schubert Gudel**
**Grosse Eschenheimer Strasse 39**
**60313 Frankfurt (DE)**

(56) Entgegenhaltungen:
**WO-A-96/02463** **DD-A- 241 247**

- **CHEMICAL ABSTRACTS, vol. 115, no. 10, 9.September 1991 Columbus, Ohio, US; abstract no. 95396p, H. KASHIWASE ET AL.: "Preparation of magnesium hydroxide." Seite 183; XP000253043 & JP-A-03 122 011 (NIPPON CHEMICAL INDUSTRIAL) 24.Mai 1991**
- **DATABASE WPI Section Ch, Week 7807 Derwent Publications Ltd., London, GB; Class E33, AN 78-13660a XP002008151 V.S. KOMAROV ET AL.: "Magnesium hydroxide with high surface area - prepared by hydration of magnesium oxide at high temperature and pressure." & SU-A-559 899 (AS BELO GEN INORG) , 27.Juni 1977**
- **DATABASE WPI Section Ch, Week 8932 Derwent Publications Ltd., London, GB; Class E33, AN 89-231588 XP002008152 & JP-A-01 167 214 (KAWATETSU KOGYO KK) , 30.Juni 1989**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 791 559 B1

## Beschreibung

Die Erfindung betrifft ein Verfahren zur Herstellung eines kristallinen Magnesiumhydroxids aus einer magnesiumhaltigen Substanz unter hydrothermalen Bedingungen.

Grobkristallines, hochwertiges Magnesiumhydroxid wird unter anderem als halogenfreies, flammhemmendes Schutzmittel in Kunststoffen eingesetzt; insbesondere dort, wo die notwendigen Verarbeitungstemperaturen über 180°C liegen. Bei diesen Temperaturen beginnt bereits die Zersetzung von Aluminiumhydroxid, dem derzeitig hauptsächlich eingesetzten halogenfreien Flammschutzmittel.

Der heute noch relativ geringe Marktanteil von Magnesiumhydroxid in diesem Anwendungsbereich ist auf seinen hohen Marktpreis zurückzuführen, der viele Kunststoffverarbeiter und Compoundhersteller davon abhält, Magnesiumhydroxid trotz seiner dem Aluminumhydroxid gegenüber besseren Eigenschaften, wie ausgezeichnete Rauchunterdrückung, besserer Sauerstoffindex, et., einzusetzen.

Ursache für den hohen Preis von solchem Magnesiumhydroxid sind die teueren Vorstoffe und/oder aufwendige und kostspielige Verfahrensschritte bei seiner Herstellung.

Gewöhnlich geht man bei der Herstellung von grob-kristallisiertem Magnesiumhydroxid von Magnesiumchloridlösungen aus, die als sogenannte Endlaugen bei der Aufbereitung von Kalisalz anfallen. Diese Salzsolen sind in einem aufwendigen Prozess von begleitenden Verunreinigungen wie Brom, Sulfat und Kalzium zu reinigen. Anschließend erfolgt die pyrohydrolytische Spaltung in MgO und HCl gem. Gl.(1)

$$MgCl_2 + H_2O \rightarrow MgO + 2HCl \qquad \text{Gl. (1)}$$

Das Magnesiumoxid wird unter definierten Bedingungen in grobkristallisiertes Magnesiumhydroxid überführt (Gl. 2)

$$MgO + H_2O \rightarrow Mg(OH)_2 \qquad \text{Gl. (2)}$$

Alternativ kann man bekanntlich auch von Seewassermagnesia oder Magnesiakauster ausgehen. Letzterer wird durch schonende Kalzination von hochwertigem Magnesit gem. Gl. (3) erhalten.

$$MgCO_3 + \text{Energie} \dashrightarrow MgO + CO_2\uparrow \qquad \text{Gl. (3)}$$

Durch Umsetzen mit Salzsäure erhält man eine saubere Magnesiumchloridlösung, die gem. Gl. 1 und 2 weiterverarbeitet wird.

Beispielsweise wird von reinen $MgCl_2$ - bzw. $Mg(NO_3)_2$ -Lösungen ausgegangen (DE 26 59 933 B1). Unter Zusetzen von Basen wird ein in seiner chemischen Zusammensetzung definiertes basisches Magnesiumsalz erzeugt, das in einem nachfolgenden Schritt unter hydrothermalen Bedingungen in ein grob-kristallisiertes und wenig fehlgeordnetes Magnesiumhydroxid überführt wird.

Ein anderes aus der Praxis bekanntes Verfahren (Magnifin GmbH) setzt als Vorstoff Talk, ein Magnesiumhydrosilikat ein. Dieser Naturrohrstoff wird nach Aufmahlung mit Salzsäure gelaugt. Die Magnesiumchloridlösung wird von vorhandenen Verunreinigungen befreit (Eisen- und Manganausfällung). Anschließend erfolgt eine Weiterverarbeitung der sauberen Magnesiumchloridlösung wie breits zuvor beschrieben.

WO-A-96 02 463 beschreibt die Herstellung von Magnesiumhydroxid durch hydrothermale Hydratisierung von Magnesiumoxid. Ausgangstoff ist dabei durch Kalzinierung von Magnesit ($MgCO_3$) hergestelltes Magnesiumoxid.

Der vorliegenden Erfindung liegt die Aufgabe zugrunde, ein hochwertiges Magnesiumhydroxid mit einer besser geordneten Kristallstruktur und als grobkristallines Pulver weniger aufwendig herzustellen.

Diese Aufgabe wird durch den Gegenstand des Anspruchs 1 gelöst. Vorteilhafte Weiterbildungen sind durch die Unteransprüche gekennzeichnet.

Erfindungsgemäß werden keine kostspieligen Ausgangsstoffe verwendet, wobei ein Magnesiumhydroxid mit einer besser geordneten Kristallstruktur und als grobkristallines Pulver erhalten wird.

In der DD-A-241 247 wird $Mg(OH)_2$ durch eine Hydratisierung von MgO mit niedriger Reaktivität hergestellt. Als Einsatzoxid ist ein bei der Schmelzmagnesiaherstellung oder Periklas erhaltenes MgO genannt. Betont wird dabei, daß die Verwendung dieser Ausgangsstoffe zu niedrigen Kosten führt. Es ist auch die Hinzufügung von Chlorid-Ionen

zusammen mit einem kationischen Polymer zur Erhöhung der Stabilität der erhaltenen Magnesiumhydroxidaufschlämmung durch Vergrößerung der Korngrößenverteilung offenbart. Obgleich Ammoniumchlorid als chloridhaltige Verbindung genannt ist, bietet die Verwendung einer solchen Verbindung ohne kationischem Polymer keine Lösung des Problems der Kristallitgröße.

Gemäß Anspruch 1 der vorliegenden Erfindung werden MgO-reiche Reststoffe, z.B. MgO-reiche Produktionsabfälle verwendet, die hydrothermal behandelt werden.

Somit geht das hier vorgeschlagene Verfahren von einem MgO-reichen Reststoff, wie er z.B. bei der Schmelzmagnesiaherstellung als Staub anfällt aus. Dieser Staub kann nur in geringem Umfang in den Prozess zurückgeführt werden und muß daher entsorgt werden. Somit wird hier nicht von kostspieligen Vorstoffen ausgegangen, bei denen vor der Behandlung unter hydrothermalen Bedingungen aufwendige Reinigungsschritte vorzuschalten sind.

Dagegen wird in dem neuen Verfahren von einem Abfallprodukt ausgegangen, das durch einfache Verfahrensschritte in ein hochwertiges Magnesiumhydroxid umgewandelt wird.

Weitere vorteilhafte Verfahrensmaßnahmen ergeben sich aus den Unteransprüchen.

Das MgO eines bevorzugten Ausgangsstoffes liegt überwiegend in der Mineralphase Periklas vor. Bei Temperaturen unter 100°C hydratisiert er zwar in Gegenwart von Wasser nur sehr langsam und unvollständig, durchgeführte Versuche zeigen jedoch, daß unter erhöhten Druck- und Temperaturbedingungen gemäß den Ansprüchen 4 - 6 eine bedeutende Steigerung der Reaktionsgeschwindigkeit eintritt. Beispielsweise erfolgt bei einer Temperatur von 170°C eine vollständige Umsetzung zu Magnesiumhydroxid bereits nach sechs Stunden. Das auf diese Weise erzeugte Magnesiumhydroxid ist röntgenographisch gut kristallisiert, die einzelnen Kristalle haben eine Größe, die in der Regel unter 1000 Å liegt.

Überraschenderweise wurde gefunden, daß durch Zugabe von geringen Mengen einer als Komplexbildner für Magnesium wirkenden Substanz das Magnesiumhydroxid sich in seiner Kristallstruktur besser geordnet und gröber kristallin erzeugen läßt. Während ohne Zusatz von kornplexbildenden Additiven bei ansonsten gleichen hydrothermalen Bedingungen die Kristallitgröße unter 1000 Å liegt, beträgt sie bei Zusatz eines Komplexbildners oder bei einer Kombination von Komplexbildnern überwiegend über 1000 Å. Röntgenographische Untersuchungen haben ergeben, daß das damit hergestellte Magnesiumhydroxid trotz weniger aufwendiger Herstellung vergleichbare röntgenographische Werte wie nach dem Stand der Technik erzeugte Produkte zeigt.

Die norwalerweise in den magnesiumreichen Stäuben enthaltenen Verunreinigungen, - es handelt sich überwiegend um Ca-Mg-Silikate -, werden unter den hydrothermalen Bedingungen so gut wie nicht umgesetzt. Da keine Verwachsungen zwischen Magnesiumhydroxidkristallit und Verunreinigungen vorliegt, beide Phasen sich jedoch in Korngröße, Kornform und Dichte unterscheiden, ergaben Reinigungsversuche, daß nach den Ansprüchen 11 - 14 selbst im Feinstkornbereich eine physikalisch-mechanische Abtrennung der Verunreigungen möglich ist. Als problemlos und kostengünstig hat sich eine mehrstufige Zyklonierung erwiesen. Alternativ dazu sind auch eine Zentrifugierung oder Aufstromklassierung oder eine Kombination derartiger Trennverfahren möglich.

Das erfindungsgemäße Verfahren ist schematisch im Fließbild gemäß Fig. 1 dargestellt:

Danach wird ein MgO-reicher Ausgangsstoff (auch als Vorstoff bezeichnet) in einem Autoklaven unter Zusatz von Wasser und Komplexbildnern in ein Magnesiumhydroxid definierter Kristallgröße hydrothermal umgesetzt. Über eine Hydrozyklonstufe werden Verunreinigungen über den Zyklonunterlauf abgetrennt. Die Supensionen des Zyklonunterlaufs und -überlaufs werden eingedickt und einer Trockenstufe - im Bedarfsfall über eine zwischengeschaltete Filtration - zugeführt. Im Bedarfsfall kann das getrocknete Magnesiumhydroxid einem Coatingschritt unterzogen werden. - Im Zyklonunterlauf haben sich hier die Calzium-Magnesiumsilikate angereichert.

Die nachfolgenden Beispiele erläutern Varianten der Erfindung im einzelnen. Verschiedene Herstellungswege zur Erzeugung von Magnesiumhydroxid, die untersucht wurden, werden gegeben.

**Vergleichsbeispiel 1**

100g MgO-reicher Staub werden in 500ml $H_2O$ suspendiert und in einem 1l-Autoklav auf 150°C aufgeheizt. Die Reaktionszeit betrug 24h. Anschließend wurde die Suspension abfiltriert und der Feststoff mit deionisiertem Wasser 3 x gewaschen und im Trockenschrank getrocknet. Die Auswaage ergab 130,5g; der Glühverlust betrug 28,2%. Mittels röntgenographischer Analyse war kein MgO mehr nachweisbar. Die Kristallitgröße war < 0,5µ. Die Suspension war schlecht filtierbar, das getrocknete Produkt klumpig.

**Vergleichsbeispiel 2**

Die Versuchsbedingungen waren ausgenommen Temperatur (170°C) und Verweilzeit (6h) identisch mit denen des Beispiels 1.

Die Ergebnisse und Beobachtungen unterscheiden sich nicht von denen aus Beispiel 1; die Auswaage betrug 138,2g.

**Vergleichsbeispiel 3**

Die Versuchsbedingungen entsprachen dem Beispiel 2. Zusätzlich wurden der Suspension 3,5% NaCl, bezogen auf den Staubeinsatz zugegeben. Die Auswaage betrug 137,5g; der Glühverlust ergab sich zu 28,0%. Dies Suspension ließ sich etwas besser filtrieren als in den Beispielen 1 und 2. Das getrocknete Produkt war nicht freifließend und die Kristallitgröße überwiegend < 0,5µ.

**Beispiel 1**

Die Versuchsbedingungen entsprachen dem Vergleichsbeispiel 2. Zusätzlich wurden der Suspension 5% $NH_4Cl$, bezogen auf den MgO-reichen Staub zugegeben. Die Auswaage ergab 132,0g; der Glühverlust war 28,2%. Die Suspension ließ sich gut filtrieren, das getrocknete Produkt war freifließend. Die Kristallitgröße war > 0,5µ.

**Beispiel 2**

In einem 20 l-Autoklav wurden 8000g MgO-reicher Staub in 12 l Wasser suspendiert und der Suspension 400g $NH_4Cl$ zugegeben. Die Versuchsdauer betrug 12h, die Temperatur war identisch dem Vergleichsbeispiel 2. Die erhaltene Suspension wurde einer 2-stufigen Zyklonierung unterzogen; die erhaltenen Feststoffe chloridfrei gewaschen, anschließend getrocknet und analysiert. Es wurden nach der 2. Zyklonstufe 9189 g Magnesiumhydroxid gewonnen. Das Produkt war freifließend. Das Ergebnis der Zyklonierung ist aus nachfolgender Tabelle zu entnehmen:

| | Analyse Staub | Einsatz für Zyklonst. | Prod. nach 2. Zyklonst. |
|---|---|---|---|
| MgO | 90,6 % | 65,5 % | 67,2 % |
| CaO | 3,7 % | 2,56 % | 0,6 % |
| $SiO_2$ | 5,2 % | 3,66 % | 1,54 % |
| $Fe_2O_3$ | 0,19 % | 0,15 % | < 0,1 % |
| GV | 0,11 % | 28,0 % | 30,2 % |

**Beispiel 3**

Die Versuchsbedingungen waren analog Beispiel 2, jedoch wurden anstelle von $NH_4Cl$ die äquivalente Menge $NH_4$ als 10%-ige Ammoniaklösung zugesetzt und 1 % EDTA, bezogen auf die eingesetzte Menge MgO-reicher Staub. Das Ergebnis ist aus nachfolgender Tabelle zu entnehmen:

| | Analyse eingesetzter Staub | Suspension nach Autoklav | Prod. nach 2. Zyklonst. |
|---|---|---|---|
| MgO | 90,8 % | 65,3 % | 66,60 % |
| CaO | 3,5 % | 2,02 % | 0,80 % |
| $SiO_2$ | 5,1 % | 3,20 % | 1,31 % |
| $Al_2O_3$ | 0,05 % | < 0,05 % | < 0,05 % |
| Fe203 | 0,18 % | < 0,1 % | < 0,10 % |
| Cl- | < 50 ppm | < 10 ppm | < 10 ppm |
| $SO_3$ | < 50 ppm | < 10 ppm | < 10 ppm |

**Beispiel 4**

Analog Beispiel 3 wurden in einem 1m$^3$ Autoklav 100kg MgO-reicher Staub, 400l Wasser und die entsprechenden Mengen an EDTA und $NH_4$ in Form von 10%-igem Ammoniakwasser zugegeben. Die anfallende Suspension wurde unter Anwendung verschiedener Zyklonöffnungen 2-stufig zykloniert. Die anfallenden Produkte des Zyklonüberlaufs wurden filtriert, getrocknet und einer technischen Anwendungsprüfung unterzogen. Die Ergebnisse sind aus nachfolgender Tabelle zu entnehmen.

| Eingesetzte Mischung | Zyklonvariante 1 | Zyklonvariante 2 |
|---|---|---|
| Bayer AP 147 | 100 | 100 |
| Z-Variante 1 | 170 | 170 |

(fortgesetzt)

| Eingesetzte Mischung | Zyklonvariante 1 | Zyklonvariante 2 |
|---|---|---|
| Z-Variante 2 | 170 | 170 |
| ZnO, RS | 5,0 | 5,0 |
| Dynasilan | 1,0 | 1,0 |
| Vulkanox MB2 | 1,0 | 1,0 |
| Vulkanox HS | 1,5 | 1,5 |
| TRIM | 1,0 | 1,0 |
| Perkadox 14/40 | 5,0 | 5,0 |
| Sunpar | 10,0 | 10,0 |
| ML (1 + 4) 100°C min | 80 | 85 |
| MS (1 + 4) 140°C min | 5,2 | 5,8 |
| Dichte g/cm3 | 1,44 | 1,43 |
| Vulkanisation 15 min bei 180°C | | |
| Härte bei 25°C shore A | 87 | 88 |
| Härte bei 75°C shore A | 75 | 77 |
| Zugfestigkeit | 10,5 | 11,0 |
| Reißdehnung | 229 | 226 |
| Spannungswert 100% Dehnung | 7,5 | 8,1 |
| Spannungswert 200% Dehnung | 10,3 | 11,0 |
| Rückprallelastizität bei 23°C | 47 | 45 |
| Rückprallelastizität bei 75°C | 51 | 49 |
| Compression Set 72h, 23°C | 36 | 37 |
| Compression Set 7d, 23°C | 44 | 39 |
| Compression Set 22h,100°C | 9 | 10 |
| Compression Set 1h, 150°C | 3 | 5 |
| O2-Index | 37 | 36 |
| Heißluftalterung 7d, 135°C | | |
| Zugfestigkeit | 12,3 | 13,5 |
| Härte bei 23°C | 89 | 87 |
| Elektrische Kenndaten Spez. Widerstand ($\Omega \cdot cm \cdot 10^{15}$) | 1,26 | 1,44 |
| Dielektr.Verlustfaktor ($\tan \delta \times 10^{-3}$) | 17,7 | 15,9 |

**Patentansprüche**

1. Verfahren zur Herstellung eines kristallinen Magnesiumhydroxids aus einer magnesiumhaltigen Substanz unter hydrothermalen Bedingungen,
**dadurch gekennzeichnet,**
daß als magnesiumhaltige Substanz MgO-reiche Reststoffe, zum Beispiel MgO-reiche Produktionsabfälle, unter Zusatz von einem Mg-Komplexbildner hydrothermal behandelt werden.

2. Verfahren nach Anspruch 1,
**dadurch gekennzeichnet,**
daß als Reststoffe Abfälle aus thermischen Verfahren, insbesondere aus der Gasphase abgeschiedene Stäube, eingesetzt werden.

3. Verfahren nach Anspruch 1 oder 2,
**dadurch gekennzeichnet,**
daß Reststoffe mit einem MgO-Gehalt von mehr als 70 Gew.-% eingesetzt werden.

4. Verfahren nach einem der vorangehenden Ansprüche,
**dadurch gekennzeichnet,**
daß der Komplexbildner aus der Gruppe $NH_4(OH)$, Ammoniumsalze, organische Komplexbildner wie EDTA, Nitrilotriessigsäure ausgewählt wird.

5. Verfahren nach Anspruch 4,
**dadurch gekennzeichnet,**
daß der Komplexbildner aus Kombinationen von organischen Komplexbildnern mit Ammoniumionen ausgewählt wird.

6. Verfahren nach einem der vorangehenden Ansprüche,
**dadurch gekennzeichnet,**
daß eine Komplexbildung und eine Kristallisation der Magnesiumhydroxid-Kristalle gleichzeitig durchgeführt werden.

7. Verfahren nach einem der vorangehenden Ansprüche,
**dadurch gekennzeichnet,**
daß der Reststoff unter Zusatz von Wasser im Temperaturbereich von 130°C - 250°C bei sich einstellendem Wasserdampfdruck zu kristallinem Magnesiumhydroxid umgesetzt wird.

8. Verfahren nach Anspruch 7,
**dadurch gekennzeichnet,**
daß der Temperaturbereich bevorzugt 150°C - 200°C beträgt.

9. Verfahren nach Anspruch 7 oder 8,
**dadurch gekennzeichnet,**
daß die Reaktionszeit in Abhängigkeit von der Temperaturvorgabe bis zu 24 Std. beträgt, bevorzugt 3 - 6 Stunden.

10. Verfahren nach einem der vorangehenden Ansprüche,
**dadurch gekennzeichnet,**
daß zur Herstellung des Magnesiumhydroxids Rohstoffe bzw. Produktionsabfälle eingesetzt werden, die frei von Halogenen, insbesondere Chloriden und Sulfaten sind.

11. Verfahren nach einem der vorangehenden Ansprüche,
**dadurch gekennzeichnet,**
daß Verunreinigungen durch physikalisch-mechanische Verfahren bevorzugt nach der hydrothermalen Behandlung abgetrennt werden.

12. Verfahren nach Anspruch 11,
**dadurch gekennzeichnet,**
daß zur Abtrennung der Verunreinigungen eine vorzugsweise mehrstufige Zyklonierung dient.

13. Verfahren nach einem der vorangehenden Ansprüche,
**dadurch gekennzeichnet,**
daß inerte silikatische Beimengungen in der Größenordnung von 10 bis <1 Gew.-% im Magnesiumhydroxid eingestellt werden.

14. Verfahren nach Anspruch 13,
**dadurch gekennzeichnet,**
daß die Einstellung der inerten silikatischen Beimengungen durch Zyklonierung erfolgt.

**Claims**

1. Process for the production of a crystalline magnesium hydroxide under hydrothermal conditions from a substance containing magnesium,
**characterised in that**
the substance containing magnesium that is hydrothermally treated consists of MgO-rich residues, for example

MgO-rich production wastes, to which a magnesium complex former is added

2. Process according to Claim 1,
**characterised in that**
as residues, wastes from thermal processes, in particular dusts precipitated from the gaseous phase, are used.

3. Process according to Claims 1 or 2,
**characterised in that**
residues with a MgO content in excess of 70% by weight are used

4. Process according to any of the preceding claims,
**characterised in that**
the complex former is chosen from the group $NH_2(OH)$, ammonium salts, organic complex formers such as EDTA, and nitryltriacetic acids.

5. Process according to Claim 4,
**characterised in that**
the complex former is chosen from combinations of organic complex formers with ammonium ions.

6. Process according to any of the preceding claims,
**characterised in that**
complex formation and crystallisation of the magnesium hydroxide crystals are carried out simultaneously

7. Process according to any of the preceding claims,
**characterised in that**
the residue is transformed to crystalline magnesium hydroxide by adding water in the temperature range 130°C to 250°C under appropriate water vapour pressure.

8. Process according to Claim 7,
**characterised in that**
the temperature range is preferably 150°C to 200°C.

9. Process according to Claims 7 or 8,
**characterised in that**
the reaction time amounts to up to 24 h depending on the temperature established, and preferably 3 to 6 h.

10. Process according to any of the preceding claims,
**characterised in that**
to produce the magnesium hydroxide residues or production wastes are used, which are free from halogens, especially chlorides, and sulphates.

11. Process according to any of the preceding claims,
**characterised in that**
contaminants are separated off by physical and mechanical methods, preferably after the hydrothermal treatment.

12. Process according to Claim 11,
**characterised in that**
to separate off contaminants, a preferably multiple-stage cycloning method is used.

13. Process according to any of the preceding claims,
**characterised in that**
inert silicaceous impurity quantities in the magnesium hydroxide are adjusted down to the order of 10 to < 1% by weight.

14. Process according to Claim 13,
**characterised in that**
the inert silicaceous impurity quantities are adjusted by cycloning.

## Revendications

1. Procédé de préparation d'un hydroxyde de magnésium cristallin à partir d'une substance contenant du magnésium, dans des conditions hydrothermales, caractérisé en ce que l'on traite de façon hydrothermale, en tant que substance contenant du magnésium, des résidus riches en MgO, par exemple des déchets de fabrication riches en MgO, en ajoutant un agent complexant de Mg.

2. Procédé selon la revendication 1, caractérisé en ce que l'on utilise, en tant que résidus, des déchets issus de procédés thermiques, en particulier des poussières séparées de la phase gazeuse.

3. Procédé selon la revendication 1 ou 2, caractérisé en ce que les résidus sont utilisés avec une teneur en MgO supérieure à 70 % en poids.

4. Procédé selon l'une des revendications précédentes, caractérisé en ce que l'agent complexant est sélectionné dans le groupe composé de $NH_4(OH)$, de sels d'ammonium, d'agents complexants organiques comme l'EDTA, l'acide nitrolotriacétique.

5. Procédé selon la revendication 4, caractérisé en ce que l'agent complexant est sélectionné parmi les combinaisons d'agents complexants organiques avec des ions ammonium.

6. Procédé selon l'une des revendications précédentes, caractérisé en ce que sont réalisées simultanément une complexation et une cristallisation des cristaux d'hydroxyde de magnésium.

7. Procédé selon l'une des revendications précédentes, caractérisé en ce que le résidu est transformé en hydroxyde de magnésium cristallin en ajoutant de l'eau dans une gamme de températures comprise entre 130 °C et 250 °C à la pression de vapeur d'eau qui s'établit.

8. Procédé selon la revendication 7, caractérisé en ce que la gamme des températures est de préférence comprise entre 150 °C et 200 °C.

9. Procédé selon la revendication 7 ou 8, caractérisé en ce que la durée de réaction peut aller jusqu'à 24 heures en fonction des spécifications de température, et est de préférence comprise entre 3 et 6 heures.

10. Procédé selon l'une des revendications précédentes, caractérisé en ce que, pour préparer de l'hydroxyde de magnésium, on utilise des matières brutes ou des déchets de fabrication qui sont exempts d'halogènes, en particulier de chlorures et de sulfates.

11. Procédé selon l'une des revendications précédentes, caractérisé en ce que les impuretés sont séparées, de préférence après le traitement hydrothermal, par des procédés physico-mécaniques.

12. Procédé selon la revendication 11, caractérisé en ce que, pour séparer les impuretés, on utilise un cyclonage de préférence en plusieurs étapes.

13. Procédé selon l'une des revendications précédentes, caractérisé en ce que l'on ajuste, dans l'hydroxyde de magnésium, des teneurs inertes de silicate avec un ordre de grandeur allant de 10 à < 1 % en poids.

14. Procédé selon la revendication 13, caractérisé en ce que l'ajustement des teneurs inertes de silicate se fait par cyclonage.

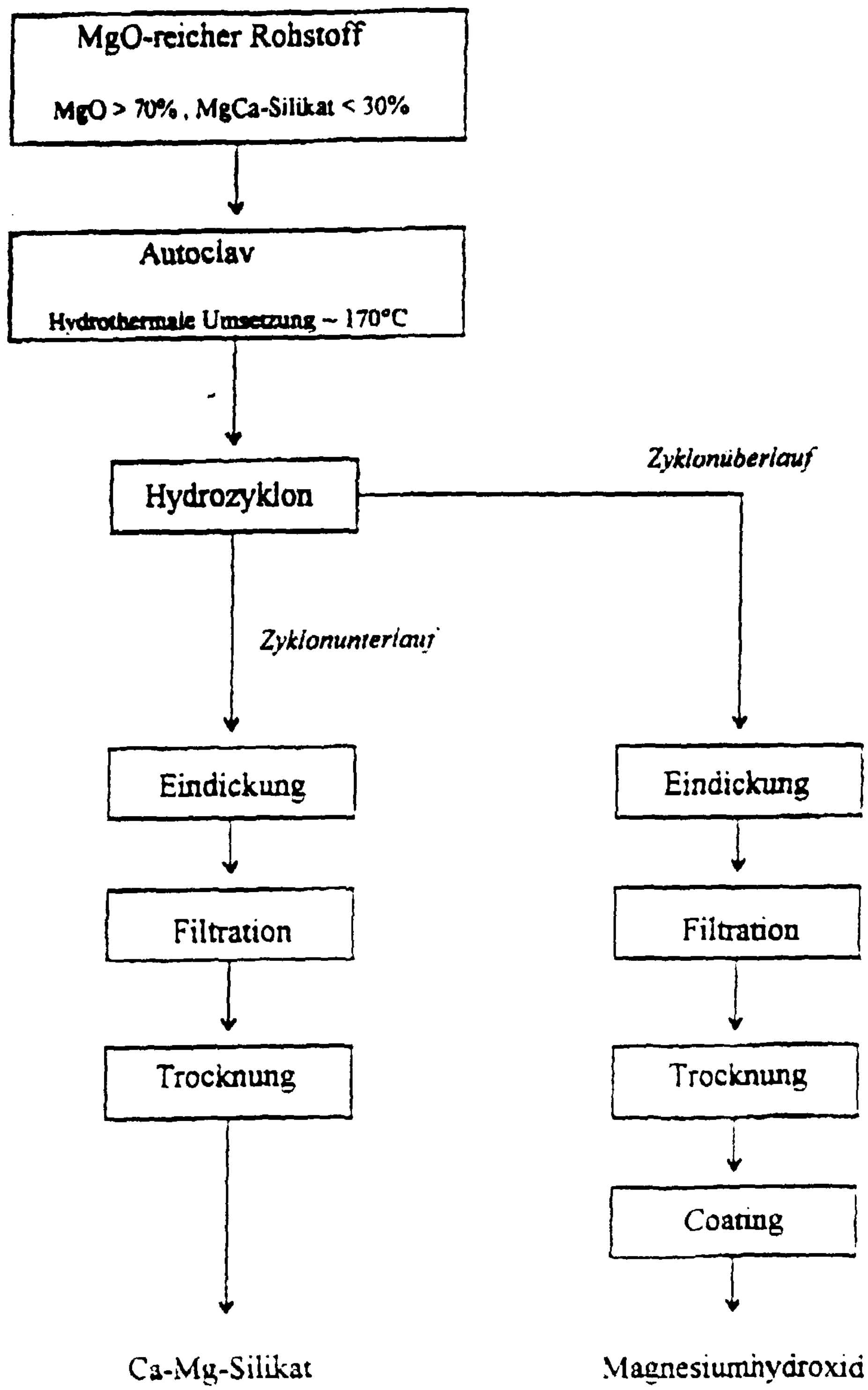
MgO-reicher Rohstoff
MgO > 70%, MgCa-Silikat < 30%
Autoclav
Hydrothermale Umsetzung ~ 170°C
Hydrozyklon
Zyklonüberlauf
Zyklonunterlauf
Eindickung
Filtration
Trocknung
Eindickung
Filtration
Trocknung
Coating
Ca-Mg-Silikat
Magnesiumhydroxid

FIG. 1